**Europäisches Patentamt**

**European Patent Office**

**Office européen des brevets**

(19)

(11) Publication number: **0 150 855**
A2

(12)

# EUROPEAN PATENT APPLICATION

(21) Application number: **85100994.4**

(51) Int. Cl.⁴: **H 02 G 13/00**

(22) Date of filing: **31.01.85**

---

(30) Priority: **01.02.84 GR 73675**

(71) Applicant: **Kokkinos, Dimitrios Nicolas, P. Fotiu 12, Amarousion Athens (GR)**

(43) Date of publication of application: **07.08.85**
**Bulletin 85/32**

(72) Inventor: **Kokkinos, Dimitrios Nicolas, P. Fotiu 12, Amarousion Athens (GR)**

(84) Designated Contracting States: **AT BE CH DE FR GB IT LI LU NL SE**

(74) Representative: **Greenstreet, Cyril Henry et al, Haseltine Lake Partners Hazlitt House 28 Southampton Buildings Chancery Lane, London WC2A 1AT (GB)**

---

(54) **Ionizing lightning conductor.**

(57)  A lightning conductor carries on its upper part an insulator 2 on which is mounted a conductive body 1, and preferably also one or more earthed conductive bodies 3 spaced from the conductive body 1 by a gap 4, arranged so that in the atmosperic electric field under storm conditions an electric arc develops from the conductive body 1, resulting in increased ionisation in the surrounding space.

EP 0 150 855 A2

## Ionizing lightning conductor

The present invention relates to lightning conductors for the effective protection of buildings, and makes use of the phenomenon of atmospheric electric field (atmospheric corona) and its subsequent effects, where this phenomenon appears in suitably insulated conductive bodies when storm conditions prevail, to obtain increased ionization at the space surrounding the lightning point.

It is well known from the theory and practice of electricity that the atmosphere shows a small conductivity due to the existence of ions within it. This ionization is caused by either the ultra violet radiation of the sun, or by cosmic radiation or by electrical phenomena or because of the existence of underground radioactive substances. Thereby, an atmospheric electric field is produced, the intensity of which measured on the ground is of

the order of 100 V/m. with a downwards direction, provided the weather is good. In cloudy weather the clouds gathered at a height of 1000-1500 m above the ground tend to develop a negative electric. charge on their bottom surface , thereby charging positively the opposing ground of the earth. Thus a strong electric field of the order of 9 KV/m up to 20 KV/m. is produced between the earth and the cloud in a storm situation.

The discharge of the lightning bolt is the natural consequency of the increase of field intensity to the above values. The process of discharge starts when a tracer comes out of the cloud advancing in a direction towards the earth. This first tracer stops after having run a small distance of the order of 10-100 m and it is followed by a new charge, which following the path of the first tracer advances towards the earth at the same speed and stops after having run a similar further distance. The above phenomenon continues and the tracer moves towards the earth at an average speed of 1000 KM/SEC. When the initial tracer, which is also called leader tracer, reaches a certain distance from the ground, another tracer, preferably produced by a natural or artificial cause, leaves the ground with an upwards direction to meet the first tracer. Then the main discharge occurs during which the electric charge of the ground tends to neutralise

the charge of the cloud.

Modern technology uses the lightning conductors as points of preference for the fall of lightning bolts, which by seizing the lightning bolts offer an effective protection to the surrounding space.

An object of the present invention is to provide an Ionizing lightning conductor, which will make use of the atmospheric electric field its.elf and of no other additional source of energy for the creation of ionization.

Another object of the invention is the creation of electric voltages by means of special arrangements of accumulation of atmospheric electric charge at the top of the lightning conductor, this resulting in a further increase of ionization.

Another final object of the invention is to provide a lightning conductor with the above advantages , which will be of simple and economic construction with a high strength and functional effectiveness.

These and other objects, characteristics and advantages of the present invention will be made clear and obvious in the following analytical description of one preferred embodiment of the invention.

Before doing this a review of the prior art relating to lightning conductors has to be made. The usage of lightning conductors begins with the Franklin rod which ends onto a point and it is mounted on the highest point of the building under p rotection. This rod causes deformation of the equipotential parallel horizontal lines of the atmospheric electric field and their packing around the top point of the rod. This leads into a local increase in the value of the electric field and this makes the rod a point of preference for the discharge of the lightning bolt. Since this first attempt, many efforts have been made to increase ionization around the highest point of the lightning conductor, this resulting in a reduction of the air resistance and in an increase of the lightning conductors effectiveness (probabilities of seizure of the lightning bolt) as well as in an increase of its zone of protection . This attempt to increase ionization with the subsequent beneficial results has up today found many applications , being realised in different ways.

Thus a method of increasing ionization is to use an artificial radiation source , such as for example $\alpha$, $\gamma$, radioactive particles, etc. The ionization obtained in this way is higher compared to that obtained using a Franklin rod . Nevertheless the usage of radioactive elements causes dangers and therefore a high cost of taking the necessary precaution measures which are in many cases enforced by law.

Another method of increase of ionization is the usage of the corona phenomenon by applying a voltage of 20 KV or higher at the top of the lightning conducto r. Based on this phenomenon many lightning conductors have been produced , which use an additional power supply to raise the voltage . This, however, leads to an operational energy cost and to an increased installation cost. Moreover, there is always a danger that this additional power supply is not activated at the right moment because of possible malfunction of the signalling and activating mechanism.

These and other disadvantage and shortcomings of the prior art are effectively overcome with the present invention. An illustrative preferred embodiment of the invention is analytically described below:

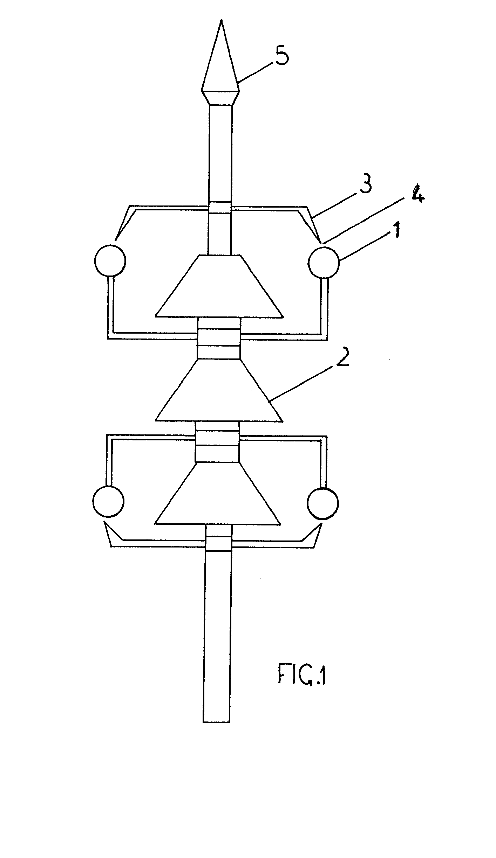

The invention will be described by reference to the accompanying drawing which shows a view of an illustrative, preferred embodiment of the invention, which aims to aid a better understanding of the proposed product of the invention by those skilled in the art.

The present invention makes use of a conductive body I of any form such as for example disc, ring, cylinder , sphere , sharp point , etc., which ean be made from any suitable , desired conductive material, where the said conductive body I is mounted at the upper part of the lightning rod at a suitable position onto an insulator 2. The insulator 2 is made from any desired and suitable insulating material , such as for example porcelain, epoxy resin, etc., where the selected material must have a high dielectric strength so that it may withstand the high atmospheric voltages without producing an arcing leakage.

According to a preferred embodiment of the invention onto one of the sides of the insulator 2 , and according to another prefered embodiment of the invention onto both sides of the insulator 2, there are mounted earthed, conductive surfaces 3 which can be made from any suitable material and can have any desired shape similar or different to the shape of the conductive surfaces I. A gap 4 is left in between each pair of conductive surfaces I and 3 . The gap 4 can be adjusted during the installation of the lightning conductor and it is obvious that when the height of the arrangements of the lightning conductor is increased, this increasing also the height at which corona phenomenon takes place, the gap has to be larger. The gap 4 is adjusted in a manner such as to allow the development of an electric arc between the conductive surfaces I and 3 as the voltage is increased, this leading to a further increase of ioniza-

tion by collision.

It has already been mentioned that the operation of the lightning conductor of the present invention is based in the exploitation of the atmospheric electric field. If we assume that the intensity of the atmospheric electric field is 8 KV/m and that the top of the lightning conductor is situated at a height of 3 m above any earthed construction, then the potential difference applied between the two above conductive surfaces is 24 KV and thus the corona phenomenon appears.

It must hereby be noted that in order to obtain a further increase of ionization any additional artificial or natural ionization source can be used, such as for example electrical source, radiation source , etc.

Due to the increase of ionization obtained from the exploitation of the atmospheric electric field, the air resistance is reduced and this brings about an increase of the speed of the tracer leaving the earth to meet the initial tracer . Eventually a rise of the point of meeting of the two tracers is obtained, which obviously provides an increased zone of protection of the lightning conductor.

The invented lightning conductor can have one or more seizure points 5 or none, where inthe latter case the seizure of the lightning bolt is performed by means of the auxiliary ionization parts, i.e. the insulated or earthed surfaces.

It must hereby be noted that the present invention has been described by reference to a merely illustrative example, to which the invention is not limited. Thus any change or amendment relating to the form and number of the arrangements of the lightning conductor, the shape, size, materials and accessories used in its construction, where such change or amendment can affect the performance parameters of the invented lightning conductor, must be considered as being contained in the scope and the aim of the present invention provided that it does not entail a new inventive step and does not comprise a development of the state of the art.

CLAIMS

1. Ionizing lightning conductor making use of the phenomenon of atmospheric corona and its subsequent effects, chatacterised by that the atmospheric electric field itself is used to create ionization, this being achieved by creating electric arcs on the top of the said lightning conductor by means of special arrangements of accumulation of atmospheric electric charge ; this leading to a further increase of ionization.

2. Ionization lightning conductor making use of the phenomenon of atmospheric corona and its subsequent effects according to the above claim 1 characterised by that the said special arrangements of accumulation of atmospheric electric charge comprise a first conductive body mounted onto an insulator at the upper part of the said lightning conductor and a second conductive body mounted on the insulator above the said first conductive body , so that an adjustable gap is provided between the said first and the said second conductive body and an electric arc may develop at the area of the said gap, where in a storm situation the height of the said arrangements above any earthed construction provides a rise in their voltage in values above 20 KV and then the corona phenomenon takes place.

3. Ionizing lightning conductor making use of the phe-

0150855

-IO-

nomenon of atmospheric corona and its subsequent effects according to the above claims I-2, characterised by that the form of the first conductive body and of the said second conductive body inbetween which innization is produced, can vary (disc, cylinder, sphere, sharp point, etc.) and the said second conductive body can have the same or different form compared to the said first conductive body, extending on either one or both sides of the said insulator.

4. Ionizing lightning conductor making use of the phenomenon of atmospheric corona and its subsequent effects, according to the above claims I and 2, charaoterised by that the number of the said special arrangements comprising one first and one second conductive body can vary.

5. Ionizing lightning conductor making use of the phenomenon of atmospheric corona and its subsequent effects according to the above claims I-2, characterised by that the said gap between the said first and second conductive body of each special arrangement is adjusted during the installation of the said lightning condu ctor so that when the voltage is increased an electric arc develops between the said first and second conductive bodies which leads to a further increase of ionization by collision.

6. Ionizing lightning conductor making use of the phenomenon of atmospheric corona, according to the above claims I and 2, characterised by that any additional artificial or natural ionization source , such as for example electrical source, radiation source , etc., can be used to provide a further increase of the ionization obtained in the area between the said first and second conductive bodies.

7. Ionizing lightning conductor making use of the phenomenon of atmospheric corona and its subsequent effects, according to the above claims I and 2, characterised by that it can be provided with one or more points for the seizure of lightning bolts.

8. Ionizing lightning conductor making use of the phenomenon of atmospheric corona and its subsequent effects, according to the above claims I and 2, characterised by that it is not provided with a point of seizure of the lightning bolts and thus the seizure of the lightning bolts is realised by the auxiliary ionization parts (insulated or earthed surfaces) .

9. Ionizing lightning conductor making use of the phenomenon of atmospheric corona and its subsequent effects, where this phenomenon appears in suitably insulated conductive bodies when storm conditions prevail according to any of the above claims I-8, as described in the attached specification and as illustrated in the accompanying drawings.

FIG.1